# DEMANDE DE BREVET EUROPEEN

(11) **EP 2 337 199 A1**
(43) Date de publication de la demande: **22.06.2011**
(21) Numéro de dépôt: 10189681.9
(22) Date de dépôt: 02.11.2010
(51) Int. Cl.: H02M 1/36

(54) **Circuit de conversion d'une énergie disponible sous une trés faible tension**

(30) Priorité: 06.11.2009 FR 0905349
(71) Demandeur: E2V Semiconductors, 38120 Saint Egreve (FR)
(72) Inventeur: Debroux, Jean-François, 38590, St Etienne de St Geoirs (FR)
(74) Mandataire: Guérin, Michel

(57) **Abrégé**

L'invention concerne un circuit de conversion d'énergie électrique permettant de convertir une énergie disponible sous une tension de quelques dizaines ou centaines de millivolts en une énergie disponible sous quelques volts.

L'énergie peut provenir par exemple d'une chaîne de thermocouples et la conversion est faite dans le but d'alimenter un circuit électronique sous quelques volts (typiquement 1,8 ou 3,3 volts). Le circuit comprend : un circuit oscillant (OSC) élévateur de tension fonctionnant même à très faible tension, alimenté par la source d'énergie et fournissant à sa sortie une tension alternative dès qu'il est alimenté, une alimentation à découpage (CMD, T1) se substituant au circuit oscillant dès qu'elle reçoit une tension d'alimentation suffisante pour son fonctionnement, et un circuit redresseur (RD) recevant une tension de sortie d'abord du circuit oscillant puis de l'alimentation à découpage et fournissant à sa sortie une tension d'alimentation pour l'alimentation à découpage.

## Description

L'invention concerne un circuit électronique de récupération d'énergie à partir d'une source d'énergie électrique à très faible tension. Ce circuit convertit l'énergie disponible sous une très faible tension en une énergie sous une tension d'alimentation plus adaptée au fonctionnement de circuits électroniques.

Dans des applications toujours plus nombreuses on cherche des solutions pour alimenter de petits circuits électroniques qui consomment très peu d'énergie. L'alimentation par câble électrique pose des problèmes de coût et d'encombrement et elle n'est pas adaptée à des circuits mobiles ou portés par des objets mobiles. L'alimentation par batterie rechargeable nécessite un rechargement périodique. L'alimentation par pile nécessite un changement périodique de piles. L'alimentation par capteur solaire ne fonctionne que si les conditions d'éclairement sont suffisamment bonnes et ne fonctionne pas la nuit.

On a donc imaginé d'autres sources d'alimentation qui seraient adaptées lorsqu'on a besoin de très peu d'énergie (par exemple de l'ordre de 1 milliwatt). Un exemple en est la conversion par effet Seebeck d'énergie thermique en énergie électrique à partir d'un gradient de température. Mais cette énergie est produite sous des tensions très faibles, de quelques dizaines à quelques centaines de millivolts, ce qui ne permet pas de faire fonctionner des circuits électroniques.

Si on savait récupérer une énergie par effet Seebeck pour alimenter des circuits électroniques, on pourrait par exemple concevoir des détecteurs de points chauds autonomes permettant de détecter des élévations de température anormales : le détecteur serait alimenté par l'énergie résultant d'un gradient de température entre le point chaud et l'environnement, et il pourrait émettre une information relative à ce gradient.

Plus généralement, il existe un besoin pour un circuit de conversion d'énergie électrique qui recevrait de l'énergie sous une très faible tension, inutilisable pour l'alimentation de circuits électroniques, et qui pourrait la convertir de manière efficace en une énergie à tension plus élevée, utilisable pour l'alimentation de circuits électroniques. L'efficacité d'un tel circuit est un paramètre critique compte-tenu des très faibles énergies disponibles.

Par très faible tension on entend une tension sensiblement inférieure à 1 volt, de préférence inférieure à 0,8 volt, c'est-à-dire une tension inférieure à celle qui permet d'alimenter normalement un circuit intégré (aujourd'hui les tensions d'alimentation de circuit intégré peuvent descendre à 3,3 volts, voire même 1,8 volts ou 1 volt, mais pas au-dessous) ; l'invention est applicable en particulier lorsque la source d'énergie ne produit qu'une centaine de millivolts, voire même seulement 10 à 20 millivolts. Le circuit selon l'invention convertit cette énergie électrique en une énergie sous une tension qui peut être typiquement de 3,3 volts mais qui dans certains cas peut être plus faible (1,8 volts) ou plus élevée (5 volts, 10 volts par exemple) et qui est utilisable comme tension d'alimentation de circuits intégrés électroniques sur silicium.

Le principe de la conversion d'énergie électrique d'une tension en une autre ne pose en général pas de problème lorsque la source d'énergie disponible est à une tension suffisante pour alimenter des circuits électroniques qui vont servir à contrôler la conversion. Mais le problème est beaucoup plus difficile lorsque la source d'énergie est à une tension trop faible car les circuits électroniques de contrôle, qu'il faut bien alimenter pour qu'ils assurent leur mission, ne peuvent pas fonctionner normalement.

On a déjà proposé, dans la publication de brevet US 2005/0041437 un circuit de conversion d'énergie fonctionnant selon deux modes : au départ un mode d'oscillateur analogique naturel avec un composant actif qui est un transistor normalement conducteur, mais avec un faible rendement ; puis un mode de commutation contrôlée avec comme composant actif un transistor normalement bloqué connecté en parallèle avec le transistor normalement conducteur et se substituant à ce dernier ; le mode de commutation prend le relais du mode d'oscillation naturelle dès que la tension de sortie est suffisante pour faire fonctionner cette commande. Le rendement est alors plus élevé.

Toutefois, on a constaté qu'on ne pouvait pas obtenir un rendement supérieur à 45% avec ce type de circuit de conversion, ce qui est insuffisant.

L'invention propose un circuit de conversion d'énergie fournissant sur une sortie une tension à composante continue à partir d'une source d'énergie électrique à très faible tension continue, caractérisé en ce qu'il comporte :
- un circuit oscillant élévateur de tension fonctionnant même à très faible tension, alimenté par la source d'énergie et fournissant à sa sortie une tension alternative dès qu'il est alimenté ; ce circuit utilise un transformateur élévateur avec un enroulement primaire relié en série entre la source d'énergie et un transistor à tension de seuil négative, et un enroulement secondaire,
- une alimentation à découpage se substituant au circuit oscillant dès qu'elle reçoit une tension d'alimentation suffisante pour son fonctionnement ; l'alimentation à découpage utilise l'enroulement secondaire du transformateur, ainsi qu'un enroulement primaire qui est relié en série entre la source d'énergie et un transistor MOS de découpage, mais qui est bobiné en sens inverse de l'enroulement primaire mentionné en premier (celui du circuit oscillant) pour inverser le signe de la transformation ;
- un circuit redresseur recevant une tension de sortie d'abord du circuit oscillant puis de l'alimentation à découpage et fournissant à sa sortie une tension d'alimentation pour l'alimentation à découpage ; ce circuit redresseur est connecté au secondaire du transformateur.

Plus précisément, l'alimentation à découpage peut utiliser certains éléments du circuit oscillant et inclut au moins un transistor de découpage et un circuit de commande de découpage alimenté par la sortie du redresseur ; des moyens sont prévus pour interrompre le fonctionnement du circuit oscillant après la mise en fonctionnement du circuit d'alimentation à découpage.

La sortie du circuit de conversion d'énergie est la sortie du circuit redresseur ; elle fournit après une phase de mise en route progressive une tension d'alimentation ayant un niveau moyen de quelques volts. Lors de la mise en marche du circuit de conversion selon l'invention, le circuit d'alimentation à découpage ne peut pas fonctionner. Mais le circuit oscillant élévateur de tension peut fonctionner (par exemple un circuit ne comportant que des inductances, des capacités, et un dispositif actif ne nécessitant qu'une très basse tension, fonctionne à n'importe quelle tension d'alimentation). Dès que le niveau moyen de la tension de sortie du circuit redresseur est suffisant (par exemple 3,3 volts) pour faire fonctionner le circuit de commande de découpage, l'alimentation à découpage se met en route et se substitue au circuit oscillant pour alimenter le circuit redresseur. Le fonctionnement naturel du circuit oscillant est alors interrompu.

L'alimentation à découpage, contrôlée par le circuit de commande, peut alors réguler la tension de sortie fournie par le circuit redresseur alors que le circuit oscillant élévateur de tension ne le pouvait pas. De plus, l'alimentation à découpage a, du fait de son principe de fonctionnement, et en particulier du fait de l'inversion de sens d'enroulement primaire lorsqu'on passe du mode oscillant naturel au mode d'alimentation à découpage, un rendement bien meilleur que l'alimentation à oscillateur et circuit résonant.

De préférence, le circuit oscillant élévateur de tension comprend
- un ensemble en série d'un transistor MOS à tension de seuil négative et d'un enroulement primaire d'un transformateur élévateur de tension, l'ensemble en série recevant la tension de la source,
- un enroulement secondaire du transformateur couplé à une capacité d'accord pour former un circuit résonant dont la sortie est reliée à l'entrée du circuit redresseur, et
- une liaison de contre-réaction entre le circuit résonant et la grille du transistor MOS à tension de seuil négative.

Le transistor à tension de seuil négative est conducteur même en l'absence de tension sur sa grille. De ce fait, l'oscillateur constitué par le transformateur élévateur, le circuit résonant au secondaire du transformateur, la liaison de contre-réaction, et le transistor au primaire du transformateur, oscille même à très faible tension d'alimentation. Le circuit redresseur redresse la tension produite par le secondaire du transformateur.

L'alimentation à découpage utilise des éléments communs avec le circuit oscillant, en particulier le transformateur qui sert au circuit oscillant.

Des moyens sont prévus pour bloquer le transistor MOS à tension de seuil négative, après la phase de démarrage de l'alimentation à découpage. Ces moyens peuvent comprendre un circuit redresseur auxiliaire fournissant une tension de redressement de signe opposé à celle du premier circuit redresseur ; ou bien ils peuvent comprendre une pompe de charge alimentée par des impulsions issues du circuit de commande de découpage ; l'intérêt de cette deuxième solution est que le blocage du circuit oscillant ne se fait que lorsqu'on est sûr que l'alimentation à découpage a commencé à fonctionner.

Des moyens sont prévus aussi pour commander un interrupteur de déconnexion de la capacité d'accord du circuit résonant.

Le transistor MOS de découpage est en principe un transistor différent du transistor MOS à tension de seuil négative, mais dans certains cas on pourrait envisager d'utiliser le même transistor, commandé différemment.

L'enroulement primaire qui sert au fonctionnement en mode d'alimentation à découpage est de préférence un enroulement différent de l'enroulement primaire qui sert au fonctionnement en mode de circuit oscillant naturel, pour qu'il soit plus facile de prévoir une inversion du signe de la transformation en tension à partir de la source d'énergie. Mais on peut aussi envisager que l'enroulement est le même, à condition qu'il soit associé à un circuit d'inversion de sens de polarité. Ce circuit commute le sens relatif entre l'enroulement primaire et l'enroulement secondaire pour que, lorsqu'on passe d'un mode d'oscillation naturelle à un mode de découpage, la polarité de la tension au secondaire soit inversée pour une même polarité de tension appliquée par la source d'énergie à l'enroulement primaire.

L'invention est applicable en particulier pour la réalisation de l'alimentation électrique d'un capteur de température autonome tirant son énergie électrique d'un gradient de température au voisinage d'un corps dont la température est surveillée par le capteur.

Le rendement de conversion d'énergie qu'on peut atteindre est alors de l'ordre de 80% (en théorie plus de 90% mais avec des composants supposés sans pertes) lorsque le circuit fonctionne en mode d'alimentation à découpage.

D'autres caractéristiques et avantages de l'invention apparaîtront à la lecture de la description détaillée qui suit et qui est faite en référence aux dessins annexés dans lesquels :
- la figure 1 représente le schéma général du circuit de conversion selon l'invention ;
- la figure 2 représente le circuit oscillant dans le mode de réalisation préféré ;
- la figure 3 représente une réalisation du circuit de conversion d'énergie selon l'invention, avec un blocage de l'oscillateur par un circuit redresseur auxiliaire produisant une tension négative ;
- la figure 4 représente une autre réalisation possible, avec un blocage par pompe de charge, et dans laquelle on a en outre détaillé une réalisation possible du circuit de commande de découpage.

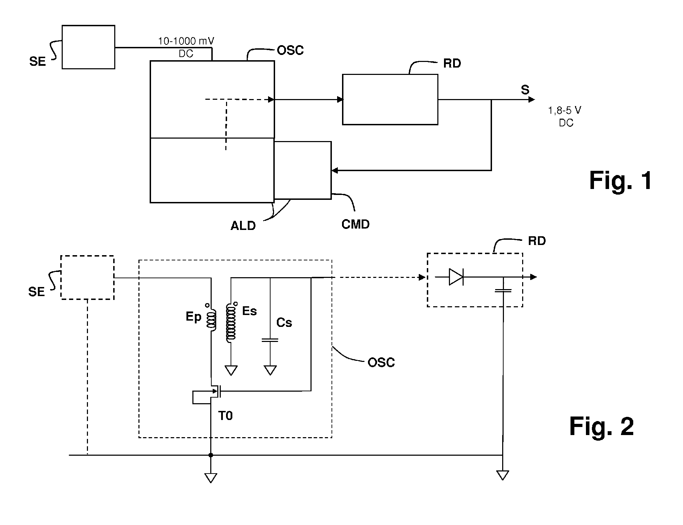

Sur la figure 1, la référence SE désigne une source d'énergie électrique à très basse tension continue, par exemple un générateur fonctionnant selon l'effet Seebeck et fournissant une tension continue de 10 à 100 millivolts, ou même plus mais en tous cas inférieure à ce qui est nécessaire pour faire fonctionner des circuits électroniques à transistors au silicium.

La référence OSC désigne un circuit oscillant capable de fonctionner à n'importe quelle tension même très faible ; il fournit un signal sinusoïdal résultant de son oscillation naturelle lorsqu'il est alimenté par la source d'énergie SE. Le circuit oscillant est un circuit élévateur de tension en ce sens que le niveau de tension crête à crête de son signal de sortie est plus élevé que le niveau de tension fourni par la source d'énergie.

La sortie du circuit oscillant est appliquée à l'entrée d'un circuit redresseur RD, lequel fournit sur sa sortie S une tension redressée. La sortie S est en même temps la sortie du circuit de conversion d'énergie de la figure 1.

Le niveau de tension fourni par le circuit oscillant est tel que le circuit redresseur puisse fournir une composante de tension continue suffisante pour alimenter un circuit électronique (1,8 ou 3,3 volts). Une telle élévation de tension, par rapport au niveau de tension continue fourni par la source d'énergie, peut être obtenue facilement avec un transformateur élévateur de tension dans le circuit oscillant.

Pour pouvoir fonctionner sous une très faible tension d'alimentation, le circuit oscillant comprend surtout des éléments de circuit passifs et pas ou presque pas de transistors, comme on le verra plus loin.

De plus, le circuit de conversion de la figure 1 comprend une alimentation à découpage ALD. Elle inclut au moins un transistor de découpage et un circuit de commande de découpage CMD qui fournit des impulsions de commande à ce transistor. Sa fonction est de fournir une tension hachée à l'entrée du redresseur. Cette tension hachée vient se substituer à la tension (en général sinusoïdale) fournie par le circuit oscillant, après le démarrage du circuit. La substitution est opérée lorsque le circuit redresseur fournit une tension suffisante pour pouvoir faire fonctionner le circuit CMD.

Comme l'alimentation à découpage peut comprendre des éléments communs avec le circuit oscillant OSC, par exemple un secondaire de transformateur, ou d'autres éléments de circuit, on a représenté l'alimentation ALD juxtaposée au circuit oscillant, avec des traits pointillés montrant que des tensions ou courants électriques produits par l'alimentation à découpage peuvent circuler à travers le circuit oscillant ; la sortie de l'alimentation ALD est considérée comme étant la même sortie que la sortie du circuit oscillant, appliquée à l'entrée du redresseur. Mais même si l'alimentation à découpage et le circuit oscillant ont des éléments communs, ils ont des fonctions différentes, le circuit oscillant ayant une fonction qui s'exerce principalement au démarrage du dispositif et l'alimentation à découpage ayant une fonction qui s'exerce principalement après interruption du fonctionnement du circuit oscillant.

A la mise sous tension du circuit de conversion selon l'invention, c'est-à-dire au moment où on alimente le circuit oscillant par la source d'énergie, l'alimentation à découpage ne peut pas fonctionner, du fait que son circuit de commande CMD, qui fonctionne avec des transistors, n'est pas alimenté et ne peut donc pas produire et envoyer les impulsions de commande nécessaires au hachage de la tension fournie par la source d'énergie. On rappelle qu'une alimentation à découpage fonctionne en hachant un courant continu d'entrée, pour produire une tension hachée, et en élevant le niveau de la tension hachée, par exemple par un transformateur. Son circuit de commande permet d'établir des impulsions de commande de hachage qui servent notamment à réguler le niveau de tension de sortie du circuit redresseur alimenté par l'alimentation à découpage.

Dès que la tension de sortie du circuit redresseur permet au circuit de commande CMD de fonctionner, l'alimentation à découpage se met à fonctionner et elle fournit une tension hachée au redresseur en substitution de la tension sinusoïdale fournie par le circuit oscillant. Le fonctionnement du circuit oscillant est alors interrompu. Les moyens d'interruption du fonctionnement du circuit oscillant dépendent de la constitution du circuit oscillant et ne sont pas représentés sur la figure 1.

La figure 2 représente un exemple de réalisation particulièrement simple d'un circuit oscillant fonctionnant même à très faible tension.

Il comprend un transformateur ayant un enroulement primaire Ep et un enroulement secondaire Es avec un nombre de spires beaucoup plus important dans le secondaire que dans le primaire pour constituer un transformateur élévateur de tension.

Un transistor MOS T0 à tension de seuil négative (appelé aussi transistor MOS déplété) est placé en série avec l'enroulement primaire Ep, et cet ensemble en série est alimenté par la source d'énergie SE. Le transistor T0 est de préférence un NMOS mais il pourrait être un PMOS. II est placé dans cet exemple du côté du potentiel le plus bas (représenté comme la masse) de la source d'énergie mais il pourrait être placé du côté du potentiel le plus élevé, et ceci aussi bien dans le cas d'un NMOS que d'un PMOS.

Une capacité d'accord Cs est mise en parallèle avec l'enroulement secondaire pour constituer un circuit résonant à une fréquence souhaitée. Le circuit oscillera à la fréquence de résonance déterminée par la valeur d'inductance de l'enroulement secondaire et la valeur de capacité Cs. La capacité peut aussi être connectée aux bornes de l'enroulement primaire pour assurer la résonance ; dans ce cas la résonance est déterminée par l'inductance de l'enroulement primaire et la capacité. La sortie du circuit résonant est reliée dans cet exemple directement à la grille du transistor T0 et constitue une liaison de contre-réaction qui permet l'oscillation du circuit. Les orientations d'enroulement primaire et secondaire sont choisies pour qu'il y ait effectivement une contre-réaction engendrant un gain de boucle supérieur à 1 et donc une oscillation. On a représenté conventionnellement les sens d'enroulements par un point de référence sur une borne des enroulements ; selon la convention habituelle, si la tension est positive du côté du point sur le primaire, elle est positive aussi du côté du point sur le secondaire. Dans le cas de la figure 2 et des figures suivantes, on a supposé que la source d'énergie fournit une tension positive par rapport à la masse et l'enroulement primaire est relié du côté positif de la source.

On verra que la liaison entre l'enroulement secondaire et la grille du transistor T0 peut être fait de préférence par une capacité de liaison plutôt que par une connexion directe.

La sortie du circuit résonant constitue la sortie du circuit oscillant et elle est appliquée au circuit redresseur RD.

Le circuit redresseur peut être constitué simplement par une diode D et une capacité C ; la résistance R représentée figure la charge de sortie du circuit de conversion d'énergie. Un redresseur de constitution plus complexe, peut bien entendu être prévu, la constitution du redresseur n'entrant pas dans l'objet de la présente invention.

Le sens de connexion de l'enroulement secondaire dépend du sens du redressement. En supposant qu'on souhaite fournir une tension positive à partir d'une tension positive de la source d'énergie SE, on connecte l'enroulement secondaire de telle sorte qu'il fournisse au circuit redresseur une tension positive lorsque la tension de la source d'énergie, reportée dans l'enroulement primaire par la mise en conduction du transistor T0, est positive. C'est pourquoi, si le point de référence de l'enroulement primaire Ep est représenté du côté connecté à la source d'énergie, le point de référence de l'enroulement secondaire Es est représenté du côté connecté au redresseur, l'autre borne de l'enroulement secondaire étant à la masse.

Le circuit représenté sur la figure 2 est un circuit de conversion d'énergie qui fournit à sa sortie une tension redressée de niveau plus élevé que la tension de la source d'énergie, et il fonctionne même pour des tensions de source d'énergie SE très faibles, par exemple 10 millivolts, du fait que le transistor T0 a une tension de seuil négative et est donc conducteur même pour une tension nulle entre sa grille et sa source.

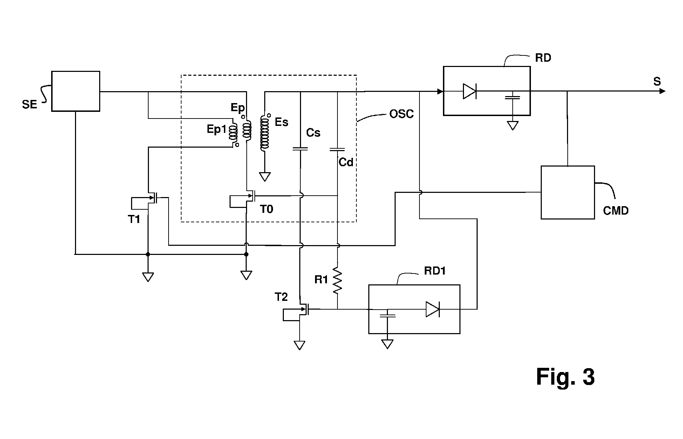

La figure 3 représente l'intégration de l'alimentation à découpage ALD dans le circuit de conversion d'énergie élévateur de tension de la figure 2.

Le circuit oscillateur est le même que celui de la figure 2 à l'exception de modifications effectuées pour permettre d'interrompre facilement le fonctionnement du circuit oscillant par une action sur la grille du transistor T0 : on prévoit maintenant que la liaison de contre-réaction entre la sortie du circuit oscillant et la grille du transistor T0 est faite par une capacité de découplage Cd. Cela permet de continuer à avoir la contre-réaction désirée pour la fréquence d'oscillation tout en laissant la possibilité d'appliquer sur la grille du transistor une tension de polarisation négative apte à le bloquer. D'autre part, on prévoit un commutateur (transistor T2) pour connecter ou déconnecter la capacité d'accord Cs qui est en parallèle sur le secondaire Es du transformateur.

L'alimentation à découpage ALD de la figure 3 comporte les éléments suivants : un transistor de découpage T1, le circuit de commande CMD pour appliquer des impulsions de commande à ce transistor, et le transformateur dont le secondaire est Es et qui fait partie du circuit oscillant OCS.

Le transistor de découpage T1 est de type NMOS dans l'exemple représenté mais peut être aussi de type PMOS ; il est relié à l'une de bornes d'alimentation de la source SE, ici une borne négative considérée comme la masse, mais il pourrait être relié à l'autre borne (positive).

Le transistor T1 est en série avec un enroulement de transformateur qui est de préférence un deuxième enroulement primaire Ep1 du même transformateur élévateur qui fait partie du circuit oscillant. Le deuxième enroulement primaire Ep1 est bobiné en sens inverse de l'enroulement Ep. C'est pourquoi, par convention, on a représenté un point de référence de l'autre côté. L'enroulement secondaire Es qui sert au circuit oscillant fait partie aussi de l'alimentation à découpage. L'enroulement secondaire Es constitue la sortie de l'alimentation à découpage comme il constitue la sortie du circuit oscillant, et cette sortie commune est reliée à l'entrée du redresseur RD. Par conséquent, en mode d'alimentation à découpage, si la source d'énergie fournit une tension positive et si le transistor T1 est conducteur, cette tension positive, reportée sur l'enroulement primaire Ep1, produit une tension négative sur l'enroulement secondaire Es. Par contraste, en mode d'oscillation naturelle, lorsque le transistor T0 est conducteur, une tension positive de la source d'énergie est reportée sur l'enroulement primaire Ep et produit une tension positive sur l'enroulement secondaire. On inverse donc le sens de fonctionnement du transformateur lorsque le circuit fonctionne en alimentation à découpage avec le transistor T1.

Des moyens sont prévus pour bloquer le transistor T0 (et donc le circuit oscillant) quand l'alimentation à découpage se met en route, c'est-à-dire quand le circuit de commande CMD reçoit du redresseur une tension d'alimentation suffisante pour pouvoir fonctionner. Ces moyens comprennent une polarisation de la grille du transistor T0 par une tension suffisamment négative. Cette tension est produite, dans l'exemple de la figure 3, par un deuxième circuit redresseur RD1, de polarité opposée au circuit redresseur RD et recevant le même signal de sortie du secondaire Es ; le deuxième circuit redresseur RD1 fournit donc une tension redressée négative (opposée à la tension de sortie du circuit de conversion) ; cette tension est appliquée par l'intermédiaire d'une résistance R1 à la grille du transistor T0 et bloque sa conduction. Le deuxième redresseur RD1 fournit une puissance extrêmement faible et peut être réalisé avec de très petits composants intégrables sur une puce de circuit intégré.

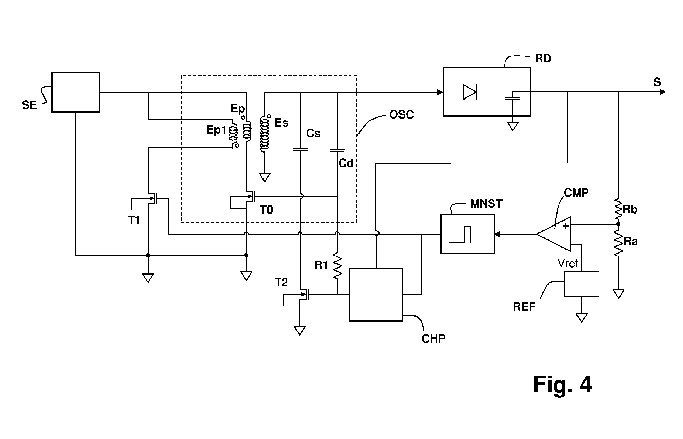

La constitution du circuit de commande de découpage CMD n'est pas détaillée sur la figure 3 ; un exemple en sera donné à la figure 4. Le circuit CMD fournit des impulsions de commande à une fréquence de travail choisie, par exemple quelques dizaines de kilohertz. Ce circuit établit une régulation de la tension de sortie du redresseur en agissant sur le rapport cyclique des impulsions fournies, par exemple en agissant sur le rapport entre la durée d'une impulsion de mise en conduction et l'intervalle de temps qui sépare deux impulsions successives. La régulation peut être automatique et le circuit de commande peut comprendre notamment un comparateur de tension qui détecte la tension fournie par le redresseur, qui la compare à une tension de consigne souhaitée et qui modifie le rapport cyclique des impulsions dans un sens tendant à rapprocher la tension de sortie effective de la tension de consigne.

On remarquera que le transistor T1 est naturellement bloqué tant que le circuit CMD ne fonctionne pas, c'est-à-dire en l'absence de tension d'alimentation suffisante du circuit CMD, alors que le transistor T0 est naturellement conducteur en l'absence de tension d'alimentation suffisante.

Pour le fonctionnement correct de l'alimentation à découpage, et en particulier pour que les signaux de commutation soient aussi carrés que possibles, il est préférable que la fréquence de résonance naturelle du secondaire du transformateur soit beaucoup plus élevée que la fréquence de travail de l'alimentation à découpage. Pour cette raison, on prévoit de déconnecter la capacité d'accord Cs lorsque le circuit de conversion cesse d'être en mode oscillateur et passe en mode alimentation à découpage. Un transistor T2 à tension de seuil négative est placé en série entre la capacité Cs et la masse et joue le rôle de commutateur pour mettre en service ou déconnecter la capacité d'accord en parallèle sur l'enroulement secondaire Es. Ce transistor T2 est naturellement conducteur même lorsque la tension d'alimentation est très faible. La grille de ce transistor reçoit une tension de polarisation négative lorsqu'on passe en mode alimentation à découpage ; par exemple elle est connectée directement à la sortie du deuxième circuit redresseur RD1, de sorte que le transistor T2 reçoit une tension négative et se bloque en même temps que le transistor T0.

Le rendement du circuit de conversion d'énergie est largement amélioré du fait de l'inversion des polarités de l'enroulement primaire dans le passage du mode d'oscillation naturelle au mode d'alimentation à découpage. II n'y a pas de conduction simultanée dans l'enroulement primaire et dans l'enroulement secondaire contrairement à ce qui se produirait si on adoptait pour le mode d'alimentation à découpage le même sens d'enroulement primaire que pour le mode d'oscillation naturelle. Cette absence de conduction simultanée au primaire et au secondaire évite des pertes d'énergie importantes.

La réalisation de la figure 3 comporte un enroulement primaire spécifique (Ep1) pour l'alimentation à découpage, et un transistor spécifique (T1) pour assurer le découpage. On pourrait conserver un seul enroulement primaire, à la condition de prévoir des transistors supplémentaires pour commuter le sens de connexion de cet enroulement lorsqu'on passe du mode oscillateur au mode alimentation à découpage.

On pourrait aussi utiliser le transistor T0 comme transistor de découpage et ne pas utiliser un transistor supplémentaire T1. Les impulsions du circuit de commande CMD seraient appliquées à la grille du transistor T0. Ce transistor serait connecté soit à un enroulement primaire tel que Ep1, différent de l'enroulement Ep, soit à l'enroulement Ep, à condition de prévoir des transistors de commutation du sens de connexion de cet enroulement.

A la figure 4, on a représenté une réalisation différente pour le blocage des transistors T0 et T2 lors du passage en mode alimentation à découpage, et de plus on a représenté à titre d'exemple le détail d'un circuit de commande de découpage CMD qui peut être utilisé aussi dans la réalisation de la figure 3.

Le circuit CMD comprend ici un comparateur de tension CMP qui reçoit d'un côté une tension de référence Vref (produite par exemple par un circuit de référence REF de type bandgap) et de l'autre une fraction de la tension de sortie du circuit de conversion. Cette fraction est produite par exemple par un diviseur résistif Ra, Rb. Le comparateur actionne une bascule monostable MNST qui fournit une impulsion positive lorsque la tension du pont diviseur descend au-dessous de la tension de référence. Le comparateur entretient l'oscillation grâce à un effet d'hystérésis et il maintient ses deux entrées à des potentiels très voisins. L'impulsion de la bascule monostable est appliquée à la grille du transistor T1 et le rend conducteur pendant une durée fixe, ce qui tend à augmenter la tension de sortie redressée.

Quelle que soit la réalisation du circuit de commande CMD, on peut prévoir, comme représenté à la figure 4, qu'une pompe de charge CHP, produisant une tension négative, est utilisée pour commander la base des transistors T2 (directement) et T0 (par l'intermédiaire de la résistance R1). La pompe de charge fonctionne par accumulation progressive de tension au fur et à mesure qu'elle reçoit les impulsions de sortie du circuit CMD, ici les impulsions de la bascule monostable MNST. Cette solution permet d'établir une tension de blocage négative sur la grille des transistors T0 et T2 uniquement lorsqu'on est sûr que l'alimentation à découpage a commencé à fonctionner, ce qui n'est pas le cas dans la réalisation de la figure 3. C'est la présence d'impulsions successives à la sortie de la bascule monostable qui est le signe du fonctionnement de l'alimentation à découpage.

Dans une application à un capteur de température destiné à détecter un échauffement anormal d'un objet, la source d'énergie à très basse tension peut être constituée par une chaîne de thermocouples ayant chacun une jonction placée à la température de l'objet et une autre jonction à la température ambiante. Le capteur est alimenté en tension en cas d'échauffement et peut transmettre, par exemple par un circuit radiofréquence alimenté par le circuit de conversion selon l'invention, une information sur cet échauffement.

## Revendications

1. Circuit de conversion d'énergie fournissant sur une sortie (S) une tension à composante continue à partir d'une source d'énergie électrique (SE) à très faible tension continue, **caractérisé en ce qu'**il comporte
- un circuit oscillant (OSC) élévateur de tension fonctionnant même à très faible tension, alimenté par la source d'énergie et fournissant à sa sortie une tension alternative dès qu'il est alimenté, ce circuit oscillant utilisant un transformateur élévateur avec un enroulement primaire (Ep) relié en série entre la source d'énergie et un transistor (T0) à tension de seuil négative, et un enroulement secondaire (Es),
- une alimentation à découpage (ALD) se substituant au circuit oscillant dès qu'elle reçoit une tension d'alimentation suffisante pour son fonctionnement, l'alimentation à découpage utilisant l'enroulement secondaire du transformateur ainsi qu'un enroulement primaire qui est relié en série entre la source d'énergie et un transistor MOS de découpage (T1) et qui est bobiné en sens inverse de l'enroulement primaire mentionné en premier pour inverser le signe de la transformation ;
- un circuit redresseur (RD) connecté à l'enroulement secondaire, recevant une tension de sortie d'abord du circuit oscillant puis de l'alimentation à découpage et fournissant à sa sortie une tension d'alimentation pour l'alimentation à découpage.

2. Circuit de conversion d'énergie selon la revendication 1, **caractérisé en ce que** l'enroulement primaire de l'alimentation à découpage est un deuxième enroulement primaire (Ep1) du transformateur.

3. Circuit de conversion d'énergie selon la revendication 1, **caractérisé en ce que** l'enroulement primaire de l'alimentation à découpage est le même que l'enroulement primaire du circuit oscillant, des transistors de commutation étant prévus pour commuter le sens de connexion de l'enroulement quand on passe du mode oscillant au mode d'alimentation à découpage.

4. Circuit de conversion d'énergie selon l'une des revendications 1 à 3, **caractérisé en ce que** le circuit oscillant élévateur comprend :
une capacité reliée à l'enroulement secondaire pour former un circuit résonant dont la sortie est reliée à l'entrée du redresseur, et
une liaison de contre-réaction entre le circuit résonant et la grille du transistor MOS à tension de seuil négative.

5. Circuit de conversion d'énergie selon l'une des revendications 1 à 4, **caractérisé en ce qu'**il comprend des moyens pour interrompre la conduction du transistor à tension de seuil négative après la mise en fonctionnement du circuit d'alimentation à découpage.

6. Circuit de conversion d'énergie selon la revendication 5, **caractérisé en ce que** les moyens pour interrompre la conduction du transistor à tension de seuil négative comprennent un deuxième redresseur (RD1) placé en sortie du circuit résonant et produisant une tension de blocage du transistor à tension de seuil négative.

7. Circuit de conversion d'énergie selon la revendication 5, **caractérisé en ce que** les moyens pour interrompre la conduction du transistor à tension de seuil négative comprennent une pompe de charge recevant des impulsions de commande issues du circuit de commande de découpage de l'alimentation à découpage.

8. Utilisation d'un circuit de conversion selon l'une des revendications précédentes pour l'alimentation d'un capteur de température destiné à détecter un échauffement anormal d'un objet, la source d'énergie à très basse tension étant constituée par un thermocouple dont une borne est placée à la température de l'objet et une autre borne à une température d'environnement ambiant.
